Europäisches Patentamt

European Patent Office

Office européen des brevets

(19)

(11) Veröffentlichungsnummer: **0 014 875**
**B1**

(12) EUROPÄISCHE PATENTSCHRIFT

(45) Veröffentlichungstag der Patentschrift:
04.08.82

(51) Int. Cl.³: **B 29 F 3/02** // D01F6/12

(21) Anmeldenummer: 80100512.5

(22) Anmeldetag: 01.02.80

(54) Schneckenextruder für Polyvinylidenfluoridmonofile.

(30) Priorität: 23.02.79 DE 2907074

(43) Veröffentlichungstag der Anmeldung:
03.09.80 Patentblatt 80/18

(45) Bekanntmachung des Hinweises auf die Patenterteilung:
04.08.82 Patentblatt 82/31

(84) Benannte Vertragsstaaten:
BE CH DE FR GB SE

(56) Entgegenhaltungen:
EP-A-0 008 612
FR-A-1 251 409
FR-A-2 380 857
US-A-2 753 595
US-A-3 368 724
US-A-3 504 400
US-A-3 707 502
Kunststoff-Handbuch, Band XI, Seite 409 (C. HANSER VERLAG 1971)

(73) Patentinhaber: DYNAMIT NOBEL AKTIENGESELLSCHAFT, Patentabteilung
Postfach 1209, D-5210 Troisdorf, Bez. Köln (DE)

(72) Erfinder: Lang, Egon, Lindlaustrasse 41,
D-5210 Troisdorf-Oberlar (DE)
Erfinder: Nachtigall, Wilhelm K. R., Dipl.-Ing.,
Talstrasse 3, D-5441 Volkesfeld (DE)

## Schneckenextruder für Polyvinylidenfluoridmonofile

Die Erfindung bezieht sich auf eine Vorrichtung zur kontinuierlichen Herstellung von Monofilen aus Polyvinylidenfluorid mit einem einstückigen Schneckenextruder mit einer von einem coaxialen Zylindergehäuse umgebenen Einspindelschnecke mit einer Einzugs-, Kompressions-, Meterings- und Mischkopfzone zum Plastifizieren des Polyvinylidenfluorids und einem Düsenaustrittswerkzeug zum Formen der Monofile.

Es ist bekannt (siehe Kunststoff-Handbuch, Band XI, Seite 409, C. Hanser Verlag 1971) Polyvinylidenfluorid auf Schneckenstrangpressen, z. B. zu Stäben zu verarbeiten, wobei kernprogressive Schnecken Verwendung finden.

In der US-A-3 368 724 (Figur 1A, 2) ist eine Plastifizierschnecke beschrieben, welche abwechselnd aufeinanderfolgende eingängige und zweigängige Abschnitte gleicher Steigung aufweist.

In den Fig. 3 und 4 der FR-A-2 380 857 ist eine Schnecke abgebildet, welche am Kopfende eine aus Scherring und Nockenringen gebildete Mischkopfzone aufweist.

Bekannte Anlagen zum Extrudieren von Kunststoff-Fäden sind beispielsweise in dem Buch von Dr. Ing. Schenkel, Kunststoff-Extrudertechnik, Carl Hanser Verlag München, 1963, auf den Seiten 438 bis 444 beschrieben. Bei der Herstellung der Monofile ist auf die Erzielung einer glatten Oberfläche, einer guten Verstreckbarkeit und möglichst geringe Durchmesserabweichungen, d. h., einen möglichst hohen Rundheitsgrad bei mit Kreisquerschnitten auszubildenden Monofilen zu achten. Hierbei ist eine gute Plastifizierung des Polyvinylidenfluorids in einem Extruder wesentliche Voraussetzung. Da Polyvinylidenfluorid ein teilkristalliner thermoplastischer Kunststoff ist, dessen Kristallinitätsgrad im wesentlichen von der thermischen Vorbehandlung abhängt, ist auch seiner Plastifizierung genügend Aufmerksamkeit zuzuwenden, so daß Monofile mit möglichst hoher Formstabilität einerseits und guter Verstreckbarkeit andererseits extrudiert werden können, die einen hohen Kristallinitätsgrad aufweisen. Darüber hinaus werden an die Maßhaltigkeit der zu extrudierenden Profile hohe Anforderungen gestellt, die normalerweise mit Einschneckenextrudern nicht erreicht werden können, es sei denn, durch zusätzlichen Einsatz von Schmelzezahnradpumpen zur Erhöhung der Förderkonstanz oder durch nachgeschaltete Kalibriervorrichtungen.

Der Erfindung liegt die Aufgabe zugrunde, einen Schneckenextruder mit einer Einspindelschnecke zum Extrudieren von Polyvinylidenfluorid zu schaffen, mit dem eine gute Plastifizierung des Polyvinylidenfluorids möglich ist und zugleich bei hoher Förderkonstanz möglichst maßgenaue Monofile querschnittsgetreu kontinuierlich herzustellen.

Diese Aufgabe wird mit der eingangs beschriebenen Vorrichtung dadurch gelöst, daß diese ein Verdichtungsverhältnis der Schnecke von 1 : 1,2 bis 1 : 2,5 aufweist und bei der im Bereich der Kompressionszone abwechselnd aufeinander eingängige und zweigängige Abschnitte gleicher Steigung folgend vorgesehen sind und bei der die Mischkopfzone als abwechselnd aufeinanderfolgende Mischzonen und Scherzonen, von denen je zwei bis vier, vorzugsweise drei vorgesehen sind, ausgebildet ist. Der erfindungsgemäß ausgebildeten Schnecke gelingt es, Polyvinylidenfluorid zu Monofilen mit glatten Oberflächen bei einwandfreier Plastifizierung und sehr geringen Durchmesserschwankungen zu fertigen. Zurückgeführt wird dieses Ergebnis auf die Anpassung der Schnecke in ihrer Ausbildung auf die speziellen rheologischen Eigenschaften der Polyvinylidenfluoridschmelze, insbesondere einerseits die Ausbildung der Einspindelschnecke mit Teilabschnitten als doppelgängige Schnecke und zum anderen durch den Einsatz eines speziell ausgebildeten Mischkopfes mit Mischzonen und Scherzonen. Insbesondere letztere bewirken die Erhöhung der gleichmäßigen Förderkonstanz und verringern die Toleranzen der austretenden Profilstränge.

Eine vorteilhafte Ausgestaltung der Schnecke in eingängige und zweigängige Abschnitte sieht vor, daß der eingängige Steg etwa am Ende des ersten Drittels der Schnecke, d. h. etwa am Ende der Einzugszone, zum ersten Mal unterbrochen ist. Um 180° versetzt, so daß das erste Stegende und der zweite Steganfang über 180° doppelgängig verlaufen unter Halbierung der Gangbreite, wird dann der Steg fortgeführt. Eine solche Stegunterbrechung mit abschnittsweise doppelgängiger Schnecke wird vorzugsweise zwei- bis viermal innerhalb des mittleren Bereiches der Schnecke, der die Kompressionszone im wesentlichen bildet, vorgesehen. Durch diese Stegunterbrechungen und doppelgängige Ausbildung wird erreicht, daß die Polyvinylidenschmelze geteilt und umgeschichtet wird und damit insgesamt die Plastifizierung verbessert wird.

Mit der Erfindung ist es also möglich, mit einem einstufigen Schneckenextruder mit einer im Prinzip Einspindelschnecke durch spezielle Auslegung derselben Polyvinylidenfluorid einwandfrei zu plastifizieren und mit hoher Maßhaltigkeit zu extrudieren.

Der erfindungsgemäß in Scher- und Mischzonen aufgeteilte Mischkopf der Schnecke übernimmt dabei die Aufgabe, das Polyvinylidenfluorid vollständig aufzuschließen und durch einen gezielten Druckaufbau in den Scherzonen zusätzlich die Förderkonstanz günstig zu beeinflussen. Ein besonders günstiger Einfluß auf den gleichmäßigen Austrag des Polyvinylidenfluorids aus dem Schneckenextruder wird durch die wechselweise Hintereinanderschaltung von Mischzo- nen und Scherzonen erreicht.

Eine vorteilhaftere Ausgestaltung der Mischzone besteht darin, daß die Mischzone durch ringförmig auf der Schnecke angeordneten Nocken gebildet ist. Vorzugsweise sind für jede Mischzone drei Nockenringe vorgesehen, wobei die Nockenlänge und der Abstand der Nockenringe voneinander gleich groß gewählt wird. Vorzugsweise sind in jedem Nockenring 6 bis 30, vorzugsweise 18 bis 24 Nocken ausgebildet. Die Scherzone ist bevorzugt als Ring ausgebildet, wobei der Ringdurchmesser zwischen Kerndurchmesser der Schnecke und Nockenaußendurchmesser gewählt ist. An die Mischkopfzone des Schneckenextruders schließt sich dann das Düsenwerkzeug an mit einer entsprechenden Profilgebung für die zu extrudierenden Monofile.

Im Zusammenhang mit dem Extrudieren von Polyvinylidenfluorid sind für die Schnecke vorzugsweise folgende Maße zu wählen, die Schneckenlänge 20 bis 35 Schneckendurchmesser, vorzugsweise 27 bis 30 bei einem Schnekkendurchmesser von 25 bis 90 mm. Die Länge der Mischkopfzone soll hierbei 2 bis 6, vorzugsweise 3,5 Schneckendurchmesser betragen. Die Einzugszone von 6 bis 10 Schneckendurchmesser, die Kompressionszone von 5 bis 10 Schneckendurchmesser, die Meteringzone von 10 bis 15 Schneckendurchmesser. Die Länge einer Mischzone kann hierbei von 0,5 bis 1,5, vorzugsweise 0,8 Schneckendurchmesser und die Länge einer Scherzone von 0,1 bis 0,5, vorzugsweise 0,25 Schneckendurchmesser betragen. Der Abstand zwischen zwei doppelgängig ausgebildeten Abschnitten beträgt zwischen 3 bis 5 Schneckendurchmesser, vorzugsweise 4 Schneckendurchmesser.

Die Erfindung ist in der Zeichnung an einem Ausführungsbeispiel dargestellt und wird anhand dessen näher erläutert. Es zeigt

Fig. 1 schematisch eine Anlage zum Herstellen von Polyvinylidenfluorid-Monofilen durch Extrusion,

Fig. 2 einen schematischen Querschnitt durch einen Einspindelschneckenextruder,

Fig. 3 eine Aufsicht auf den Endbereich der Schnecke, die den näher ausgeführten Mischkopf nach Fig. 2 enthält,

Fig. 4 einen Ausschnitt in genauerer Darstellung der Kompressionszone der Schnecke nach Fig. 2 und

Fig. 5 vier Querschnitte der Schnecke nach Fig. 4.

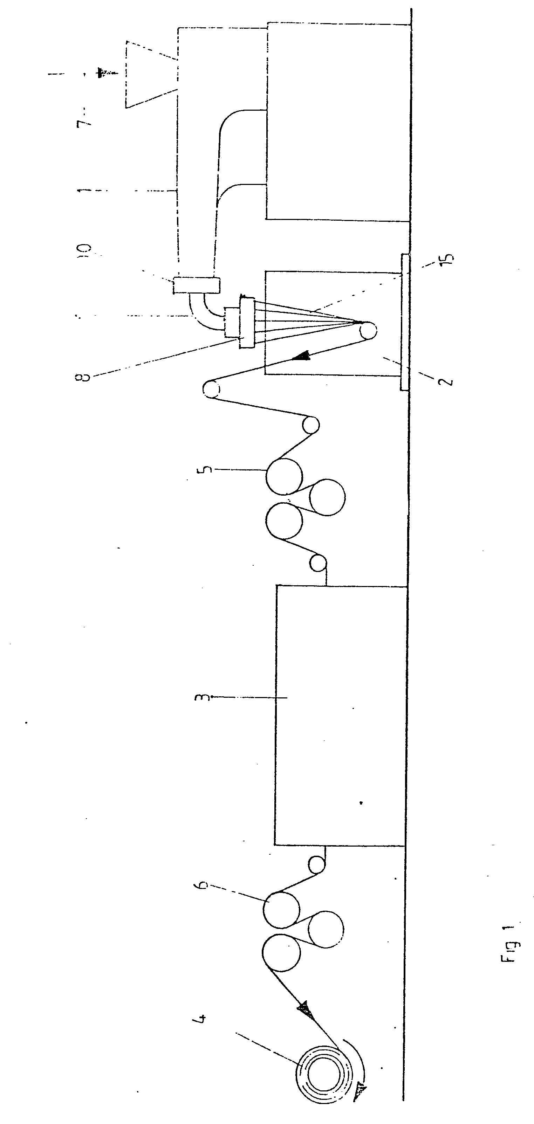

In der Fig. 1 ist schematisch eine Anlage zum Herstellen von Polyvinylidenfluorid-Monofilen dargestellt, bei der die Monofile in dem Extruder 1 bei beispielsweise 275° C plastifiziert und über das Extrudermundstück 10 über den Krümmer 9 dem Düsenaustrittswerkzeug 8 zugeführt und zu den Monofilen 15 verformt wird. Anschließend werden die Monofile 15 durch ein Kühlbad 2 geführt und über Umlenkwalzen 5 einer Reckvorrichtung 3 zugeführt, wonach sie über eine weitere Abzugsvorrichtung 6 auf die Aufwickelvorrichtung 4 aufgewickelt werden. Die Materialangabe erfolgt in Pfeilrichtung 7 in den Extruder 1. Die vorliegende Erfindung befaßt sich ausschließlich mit der Ausbildung des Extruders 1, d. h. mit der Extruderschnecke.

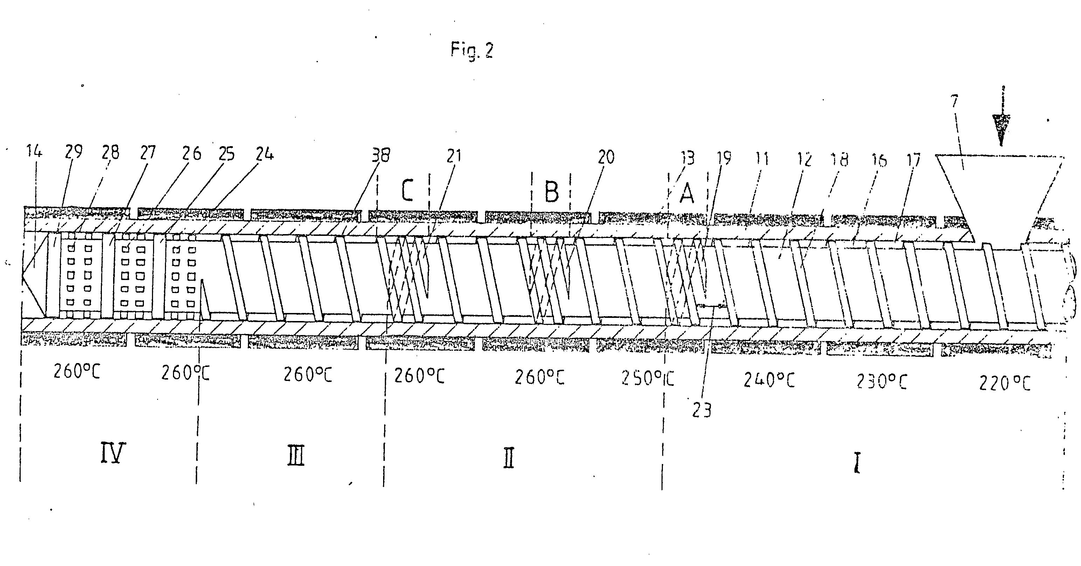

Zum Erzielen der gewünschten homogenen Plastifizierung des Polyvinylidenfluorids und einer hohen Förderkonstanz zum Erzielen maßgenauer Produkte ist die erfindungsgemäß ausgebildete Einspindelschnecke 12, wie sie in Fig. 2 schematisch im Querschnitt dargestellt ist, vorgesehen. Die Schnecke weist die Einzugszone I mit dem Einfülltrichter für die Zuführung des Materials 7, die Kompressionszone II, die Meteringzone III und die Mischkopfzone IV auf. Die Schnecke hat vorzugsweise eine Schneckenlänge von 20 bis 35 Schneckendurchmesser, vorzugsweise 29 Schneckendurchmesser bei einem Schneckendurchmesser zwischen 15 und 90 mm, vorzugsweise 40 bis 70 mm. Der Schnekkenkerndurchmesser steigt hierbei von der Einzugszone bis zur Meteringzone um etwa 10 bis 15% an. Die Kompression der Schnecke wird zwischen 1 : 1,2 bis 1 : 2,5, vorzugsweise 1 : 1,8 gewählt. Ein vorzugsweises Ausführungsbeispiel der Schnecke sieht z. B. folgende Abmessungen vor:

Schneckendurchmesser D 60 mm,
Schneckenkerndurchmesser am Anfang 39 mm,
Schneckenkerndurchmesser am Ende 50 mm,
Gesamtschneckenlänge 32,5 D; hiervon entfallen auf die Einzugszone 7 D, auf die Kompressionszone 8,5 D, auf die Meteringzone 13,5 D und auf die Mischkopfzone 3,5 D.

Das Kompressionsverhältnis der Schnecke beträgt dann 1 : 1,28, die Schnecke ist eingängig und hat eine Gangtiefe in der Einzugszone von 10,5 mm und eine Steigung von 60 mm.

Die Schnecke 12 ist von dem coaxialen zylindrischen Gehäuse 11 umgeben, wobei der Spalt 16 das halbe Schneckenspiel darstellt und zwischen Schneckenkerndurchmesser 17 und Zylindergehäuse 11 gebildet ist. Die Zonen I bis IV bilden die Schneckenlänge.

Der äußere Schneckendurchmesser 38 wird von den Stegen gebildet. Die an sich eingängige Schnecke 12 weist im Einzugsbereich den Steg 18 auf, der im Übergangsbereich zur Kompressionszone II unterbrochen ist und in Gestalt des zweiten Steges 19 um 180° versetzt doppelgängig mit dem ersten Steg 18 verläuft unter Halbierung der Gangbreite 23. Nach einer gewissen Strecke wiederholt sich die Unterbrechung des Steges 19, der nunmehr nach wiederum einem doppelgängigen Anfang mit dem Steg 20 sich fortsetzt und am Ende der Kompressionszone nochmals unterbrochen und mit dem Steg 21 bis zum Mischkopf durchgeführt ist. Die jeweils doppelgängig ausgebildeten Strecken der Schnecke sind mit den Buchstaben A, B und C gekennzeichnet und sie befinden sich im mittleren Drittel der Schnecke etwa. Es können auch nur zwei oder auch vier solcher doppelgängigen Abschnitte vorgesehen sein.

Außenseitig ist das Zylindergehäuse 11 der Schnecke mit Heizeinrichtungen 13 versehen, zu denen die Temperaturen in den einzelnen Heizabschnitten angegeben sind. Die Mischkopfzone ist abwechselnd als Mischzonen 24, 26, 28 und Scherzonen 25, 27, 29 mit abschließender Schneckenspitze 14 ausgebildet.

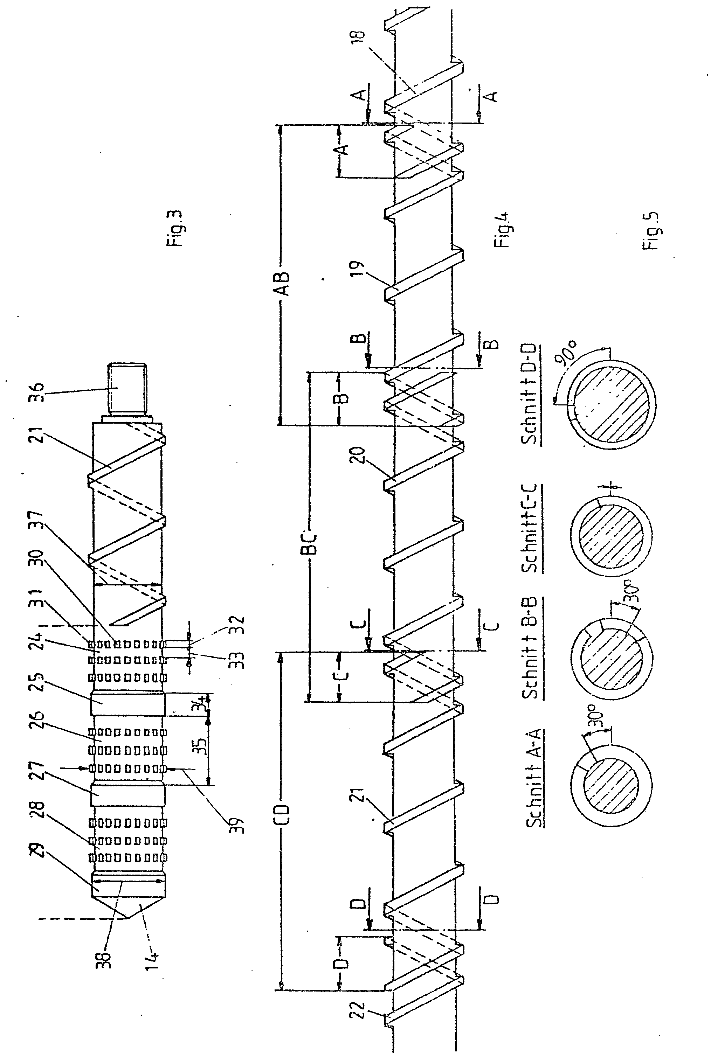

In der Fig. 3 ist der Endbereich der Schnecke, die den Mischkopf enthält, näher dargestellt. Die Mischzonen 24, 26, 28 sind untereinander gleich mit jeweils drei Nockenringen 31 aus Nocken 30 gebildet. Die Nockenlänge 32 und der Abstand 33 der Nockenringe voneinander sind vorzugsweise gleich groß gewählt. Es ist jedoch auch möglich, wie in der Fig. 2 dargestellt, jeweils nur zwei Nockenringe vorzusehen innerhalb einer Mischzone. Die Scherzonen 25, 27, 29 werden von zylindrischen Ringen gebildet. Die Länge 34 der Scherzone ist wesentlich kürzer als die Länge 35 der Mischzone. Hierbei gilt generell, daß die Scherzonen 0,1 bis 0,5 des Schneckendurchmessers lang sind, während die Mischzonen 0,5 bis 1,5 Schneckendurchmesser lang ausgebildet werden sollen. Der Abstand der Scherzone von dem benachbarten Nockenring entspricht etwa auch dem Abstand der Nockenringe untereinander. Das halbe Schneckenspiel zwischen den ringförmigen Scherzonen 25, 27 und dem Zylindergehäuse 11 der Schnecke beträgt zwischen 0,8 bis 2,5, vorzugsweise 1,5 mm. Der Mischkopf wird über den Zapfen 36 mit der übrigen Schneckenspindel fest verbunden. Der eingezeichnete Kerndurchmesser 37 der Schnecke ist etwas größer als der Kerndurchmesser der Schnecke in der Einzugszone. Mit 39 ist der Außendurchmesser der Nockenringe 31 bezeichnet.

Für das eingangs erwähnte Ausführungsbeispiel der Einschneckenspindel würde dann die Mischzone so ausgebildet, daß bei einer Gesamtlänge der Mischkopfzone von 210 mm je drei Mischzonen von 48 mm Länge mit je drei Nockenreihen mit je 20 Nocken vorgesehen sind. Die zwischen- und nachgeschalteten Scherzonen sind jeweils 15 mm lang, wobei der Scherspalt, d. h. das halbe Schneckenspiel zwischen Scherzone und Zylindergehäuse 1,5 mm beträgt. Mit einer derart gestalteten Einspindelschnecke ist es beispielsweise möglich, mit einem Durchsatz von 100 kg/h Polyvinylidenfluorid einwandfreie Monofile mit geringen Durchmesserabweichungen und guter Formbeständigkeit zu extrudieren.

In der Fig. 4 ist auszugsweise in einer maßlich anderen Darstellung der Teil der Schnecke dargestellt, der abschnittsweise in den Abschnitten A, B, C und D zweigängig bei gleicher Steigung ausgebildet ist. Hierbei sind jeweils die Strecken vom Anfang bis Ende eines Steges 19, 20, 21 gleich lang, was durch die Strecken A—B, B—C und C—D gekennzeichnet ist. Die in der Fig. 4 dargestellten Schnitte A—A, B—B, C—C und D—D sind in der Fig. 5 in Ansicht dargestellt und zeigen die jeweils versetzte Anordnung des die Zweigängigkeit hervorrufenden zusätzlichen Steges.

Die beschriebene Vorrichtung gestattet die Herstellung von Polyvinylidenfluorid-Monofilen mit glatter Oberfläche und guter Verstreckbarkeit bei geringen Durchmesserabweichungen infolge der homogenen Plastifizierung und guten Förderkonstanz der erfindungsgemäßen Vorrichtung.

**Patentansprüche**

1. Vorrichtung zur kontinuierlichen Herstellung von Monofilen aus Polyvinylidenfluorid mit einem einstufigen Schneckenextruder mit einer von einem coaxialen Zylindergehäuse umgebenen Einspindelschnecke mit einer Einzugs- (I), Kompressions- (II), Meterings- (III) und Mischkopfzone (IV) zum Plastifizieren des Polyvinylidenfluorids und einem Düsenaustrittswerkzeug zum Formen der Monofile, dadurch gekennzeichnet, daß das Verdichtungsverhältnis der Schnecke 1 : 1,2 bis 1 : 2,5 beträgt und im Bereich der Kompressionszone (II) abwechselnd aufeinanderfolgende eingängige und zweigängige (A, B, C) Abschnitte gleicher Steigung vorgesehen sind und die Mischkopfzone (IV) als abwechselnd aufeinanderfolgende Mischzonen (24, 26, 28) und Scherzonen (25, 27, 29) von denen je zwei bis vier, vorzugsweise drei vorgesehen sind, ausgebildet ist.

2. Vorrichtung nach Anspruch 1, dadurch gekennzeichnet, daß der eingängige Steg (18) etwa am Ende des ersten Drittels der Schnecke zum ersten Mal unterbrochen ist.

3. Vorrichtung nach Anspruch 1 oder 2, dadurch gekennzeichnet, daß der Steg (18, 19, 20, 21, 22) zwei- bis viermal unterbrochen ist und in diesem Bereich jeweils zweigängig über 180° ausgebildet ist, indem der weiterführende Steg um 180° zurückversetzt unter Halbierung der Gangbreite beginnt.

4. Vorrichtung nach einem der Ansprüche 1 bis 3, dadurch gekennzeichnet, daß die Mischzonen (24, 26, 28) durch ringförmig auf der Schnecke angeordnete Nocken (30) gebildet sind.

5. Vorrichtung nach Anspruch 4, dadurch gekennzeichnet, daß jede Mischzone zwei bis drei Nockenringe (31) aufweist, und die Nockenlänge (32) und der Abstand (33) der Nockenringe untereinander etwa gleich groß gewählt sind.

6. Vorrichtung nach Anspruch 4 oder 5, dadurch gekennzeichnet, daß je Nockenring (31) 6 bis 30, vorzugsweise 18 bis 24 Nocken (30) ausgebildet sind.

7. Vorrichtung nach einem der Ansprüche 1 bis 6, dadurch gekennzeichnet, daß die Schneckenlänge 20 bis 35 Schneckendurchmesser D, vorzugsweise 27 bis 30 D bei einem Schneckendurchmesser D von 25 bis 90 mm beträgt.

8. Vorrichtung nach einem der Ansprüche 1 bis 7, dadurch gekennzeichnet, daß die Mischkopfzone (IV) 2 bis 6, vorzugsweise 3,5 Schneckendurchmesser D beträgt.

9. Vorrichtung nach einem der Ansprüche 1 bis 8, dadurch gekennzeichnet, daß die Einzugszone 6 bis 10 D, die Kompressionszone 5 bis 10 D und die Meteringszone 10 bis 15 D beträgt.

10. Vorrichtung nach Anspruch 8, dadurch gekennzeichnet, daß die Länge einer Mischzone 0,5 bis 1,5 D, vorzugsweise 0,8 Schneckendurchmesser D und die Länge einer Scherzone 0,1 bis 0,5 D, vorzugsweise 0,25 Schneckendurchmesser D beträgt.

11. Vorrichtung nach einem der Ansprüche 1 bis 10, dadurch gekennzeichnet, daß die Scherzone als Ring ausgebildet ist, wobei der Ringdurchmesser zwischen Kerndurchmesser der Schnecke und Nockenaußendurchmesser liegt.

12. Vorrichtung nach einem der Ansprüche 1 bis 11, dadurch gekennzeichnet, daß der Abstand zwischen zwei zweigängigen Abschnitten zwischen 3 und 5 Schneckendurchmesser D, vorzugsweise 4 D beträgt.

## Claims

1. Apparatus for the continuous production of monofilaments of polyvinylidene fluoride, with a one-stage screw extruder having a single screw surrounded by a coaxial cylindrical housing, with an entry zone (I), compression zone (II), metering zone (III) and mixing head zone (IV) for plasticising the polyvinylidene fluoride, and a die relief-type die for shaping the monofilaments, characterised in that the compression ratio of the screw is from 1 : 1.2 to 1 : 2.5 and in the region of the compression zone (II) alternate single-threaded and double-threaded (A, B, C) sections of identical pitch are provided and the mixing head zone (IV) is constructed in the form of alternate mixing zones (24, 26, 28) and shearing zones (25, 27, 29), of which two to four, preferably three, of each are provided.

2. Apparatus as claimed in claim 1, characterised in that the single-threaded section (18) is first interrupted substantially at the end of the first third of the screw.

3. Apparatus as claimed in claim 1 or 2, characterised in that the section (18, 19, 20, 21, 22) is interrrupted two to four times and in this region it is formed so as to be double-threaded over 180°C, whilst the conveying section starts halfway along the flight, being offset by 180°C.

4. Apparatus as claimed in one of claims 1 to 3, characterised in that the mixing zones (24, 26, 28) are formed by cams (30) arranged in an annular configuration on the screw.

5. Apparatus as claimed in claim 4, characterised in that each mixing zone has two to three rings (31) of cams and the cam length (32) and the spacing (33) of the rings of cams from one another are made substantially equal to one another.

6. Apparatus as claimed in claim 4 or 5, characterised in that 6 to 30, preferably 18 to 24 cams (30) are formed in each ring (31).

7. Apparatus as claimed in one of claims 1 to 6, characterised in that the length of the screw is 20 to 35 diameters D of the screw, preferably 27 to 30 D, the screw diameter D being from 25 to 90 mm.

8. Apparatus as claimed in one of claims 1 to 7, characterised in that the mixing head zone (IV) measures 2 to 6, preferably 3.5 screw diameters D.

9. Apparatus as claimed in one of claims 1 to 8, characterised in that the entry zone measures 6 to 10 D, the compression zone 5 to 10 D and the metering zone 10 to 15 D.

10. Apparatus as claimed in claim 8, characterised in that the length of a mixing zone is formed 0.5 to 1.5 D, preferably 0.8 screw diameters D, and the length of a shearing zone is 0.1 to 0.5 D, preferably 0.25 screw diameters D.

11. Apparatus as claimed in one of claims 1 to 10, characterised in that the shearing zone is in the form of a ring, the diameter of the ring being between the minor diameter of the screw and the outer diameter of the cam.

12. Apparatus as claimed in one of claims 1 to 11, characterised in that the spacing between two doublethreaded sections is between 3 and 5 diameters D of the screw, preferably 4 D.

## Revendications

1. Dispositif pour la production continue de monofilaments de polyfluorure de vinylidène, dispositif comprenant une extrudeuse (boudineuse) à vis en pièce (à un étage), qui comporte une vis simple entourée d'une enveloppe cylindrique coaxiale et possède une zone d'alimentation (I), une zone de compression (II), une zone de dosage (III) et une zone à tête malaxeuse (IV) pour la plastification du polyfluorure de vinylidène, ainsi qu'un outil de sortie à filière pour la formation des monofilaments, caractérisé en ce que le rapport de compression de la vis est de 1 : 1,2 à 1 : 2,5; en ce qu'il est prévu, dans la région de la zone de compression (II), des tronçons à un filet et à deux filets (A, B, C), d'un même pas, tronçons qui se suivent en alternant; et en ce que la zone de la tête malaxeuse (IV) est établie sous la forme de zones de malaxage (24, 26, 28) et de zones de cisaillement (25, 27, 29), zones qui se succèdent en alternant par deux à quatre, de préférence par trois.

2. Dispositif suivant la revendication 1, caractérisé en ce que la nervure (18) formant un seul filet est interrompue une première fois à peu près à la fin du premier tiers de la vis.

3. Dispositif suivant la revendication 1 ou 2, caractérisé en ce que la nervure (18, 19, 20, 21, 22) est interrompue deux à quatre fois et est constitué, dans chaque point d'interruption, à la manière d'un filetage à deux filets sur un arc de 180°, par le fait que la nervure formant le prolongement est décalée en arrière de 180°, la largeur de pas étant réduite de moitié.

4. Dispositif suivant une quelconque des revendications 1 à 3, caractérisé en ce que les zones de lamaxage (24, 26, 28) sont constituées par des ergots (30) disposés en cercles sur la vis.

5. Dispositif suivant la revendication 4, caractérisé en ce que chaque zone de malaxage présente deux à trois cercles d'ergots (31), la longueur (32) des ergots et la distance (33) entre les cercles d'ergots étant égales entre elles.

6. Dispositif suivant la revendication 4 ou 5, caractérisé en ce que chaque cercle d'ergots (31) est formé par 6 à 30, de préférence par 16 à 24 ergots (30).

7. Dispositif suivant une quelconque des revendications 1 à 6, caractérisé en ce que la longueur de la vis représente 20 à 35 diamètres D de la vis, de préférence 27 à 30 D, le diamètre D de la vis étant égal à 25 – 90 mm.

8. Dispositif suivant une quelconque des revendications 1 à 7, caractérisé en ce que la zone (IV) de la tête malaxeuse représente 2 à 6, de préférence 3,5 diamètres D de la vis.

9. Dispositif suivant une quelconque des revendications 1 à 8, caractérisé en ce que la zone d'alimentation représente 6 à 10 D, la zone de compression — 5 à 10 D et la zone de dosage — 10 à 15 D.

10. Dispositif suivant la revendication 8, caractérisé en ce que la longueur d'une zone de malaxage représente 0,5 à 1,5 D, de préférence 0,8 de diamètre D de la vis et que la longueur d'une zone de cisaillement représente 0,1 à 0,5 D, de préférence 0,25 de diamètre D de la vis.

11. Dispositif suivant une quelconque des revendications 1 à 10, caractérisé en ce que la zone de cisaillement est constituée en anneau, le diamètre de l'anneau ayant une valeur intermédiaire entre celle du diamètre du noyau de la vis et celle du diamètre extérieur des ergots.

12. Dispositif suivant une quelconque des revendications 1 à 11, caractérisé en ce que la distance entre deux tronçons à deux filets représente entre 3 et 5 diamètres D de la vis, de préférence 4 D.

Fig 1

0 014 875

Fig. 2

Fig.3

Fig.4

Fig.5

Schnitt A-A  Schnitt B-B  SchnittC-C  Schnitt D-D

0 014 875